# EUROPEAN PATENT SPECIFICATION

(11) **EP 4 006 387 B1**
(45) Date of publication and mention of the grant of the patent: **08.05.2024**
(21) Application number: 21210487.1
(22) Date of filing: 25.11.2021
(51) Int. Cl.: F16H 61/421, F16H 61/46

(54) **HYDROSTATIC TRANSMISSION FOR A WORK VEHICLE PROVIDED WITH A SPEED AND PRESSURE BASED CONTROL SYSTEM**
HYDROSTATISCHES GETRIEBE FÜR EIN ARBEITSFAHRZEUG MIT EINEM GESCHWINDIGKEITS- UND DRUCKBASIERTEN STEUERUNGSSYSTEM
TRANSMISSION HYDROSTATIQUE POUR UN VÉHICULE DE TRAVAIL ÉQUIPÉ D'UN SYSTÈME DE CONTRÔLE BASÉ SUR LA VITESSE ET LA PRESSION

(30) Priority: 26.11.2020 IT 202000028574
(43) Date of publication of application: 01.06.2022
(73) Proprietor: CNH Industrial Italia S.p.A., 10156 Torino (IT)
(72) Inventor: Garramone, Adriano, 73100 Lecce (IT); Gravili, Andrea, 73100 Lecce (IT); Liberti, Stefano, 73100 Lecce (IT); Venezia, Antonio, 10153 Torino (IT)
(74) Representative: CNH Industrial IP Department

(56) References cited:
- EP-A1- 3 553 347
- US-A- 5 390 759

## Description

The present invention relates in general to a work vehicle having a hydrostatic transmission provided with a control system.

Motorized work vehicles are well known for use in material handling that carry an implement and have a hydraulically operated lifting arm for moving the implement. Examples of such vehicles are tractors and loaders.

A loader is a heavy equipment machine used in construction to move aside on the ground or load materials such as asphalt, demolition debris, dirt, snow, feed, gravel, logs, raw minerals, recycled material, rock, sand, woodchips, etc. into or onto another type of machinery (such as a dump truck, conveyor belt, feed-hopper, or railroad car). There are many types of loader, which, depending on design and application, are called by various names, including bucket loader, front loader, front-end loader, payloader, scoop, shovel, skip loader, wheel loader, or skid-steer.

In particular, compact wheel loaders are compact vehicles that have road wheels and carry a working implement, in particular a bucket attached to a lift arm, which is hydraulically powered. The hydraulic pressure required to operate the working implement is produced by a hydraulic pump driven by an internal combustion engine (hereinafter simply referred to as engine) of the vehicle. The same engine is also used to drive the wheels, which are commonly powered by means of a hydrostatic transmission comprising a hydraulic pump driven by the engine and a hydraulic motor for driving the wheels, the hydraulic pump and the hydraulic motor of the hydrostatic transmission being hydraulically connected to each other by means of a forward line and a rearward line of a hydraulic circuit.

More specifically, the present invention relates to a work vehicle of the above-mentioned type, wherein the motor of the hydrostatic transmission is an electronically-controlled variable displacement hydraulic motor, that is a hydraulic motor whose displacement is varied under control of an electronic control unit. Examples are disclosed in patent applications US5390759A and EP3553347A.

In known work vehicles of the above-mentioned type, there is a need for safe control of the movement of the vehicle. In particular, in work vehicles equipped with purely hydraulically controlled motors, when moving downhill the vehicle tends to accelerate in an uncontrolled manner, as the motor displacement is too low. Furthermore, known work vehicles equipped with traditionally controlled hydraulic transmission have low deceleration once the accelerator pedal is released, and generally low acceleration and deceleration levels. Finally, when the work vehicle is working on high load conditions, such as when pushing through a material, torque tends to be too low.

It is therefore an object of the present invention to provide a solution to such problems, and thus to provide a hydrostatic transmission for work vehicles which does not suffer from the mentioned drawbacks of the prior art.

This and other objects are fully achieved according to the present invention by virtue of a hydrostatic transmission for a work vehicle as set forth in independent claim 1, as well as by a method for controlling a hydrostatic transmission for a work vehicle as set forth in claim 12.

Advantageous embodiments of the invention are defined in the dependent claims.

In short, the invention is based on the idea of providing a hydrostatic transmission for a work vehicle, the hydrostatic transmission comprising:
a hydraulic pump arranged to be mechanically coupled to an internal combustion engine of the vehicle;
an electronically-controlled variable displacement hydraulic motor arranged to be mechanically connected at least to driving wheels of the vehicle; and
an electronic control unit;
wherein the hydraulic pump and the hydraulic motor are hydraulically connected to each other to define a closed hydraulic circuit;
the hydraulic transmission further comprises:
a first pressure sensor arranged to measure the pressure on a forward line of the hydraulic circuit and to provide a signal representative of such pressure to the electronic control unit;
a second pressure sensor arranged to measure the pressure on a rearward line of the hydraulic circuit and to provide a signal representative of such pressure to the electronic control unit;
a speed sensor arranged to measure the travel speed of the work vehicle and to provide a signal representative of such speed to the electronic control unit;
the electronic control unit is coupled to said first pressure sensor, second pressure sensor and speed sensor to receive from said sensors signals representative of the respective measurements, and
the electronic control unit is configured to control the adjustment of the displacement of the hydraulic motor by setting a commanded displacement of the hydraulic motor that is equal to the greater of a pressure-based displacement and a speed-based displacement;

wherein the pressure-based displacement is a function of the operational pressure, the operational pressure being set as either the pressure on the forward line of the hydraulic circuit, if the work vehicle is moving forward, or the pressure on the rearward line of the hydraulic circuit, if the work vehicle is moving rearward; and
wherein the speed-based displacement is a function of the travel speed of the work vehicle.

The features and advantages of the present invention will become more apparent from the following detailed description, given purely by way of non-limiting example with reference to the appended drawings, where:
Figure 1 shows a wheel loader on which the hydrostatic transmission of the invention may be mounted;
Figure 2 schematically shows a hydrostatic transmission according to an embodiment of the present invention;

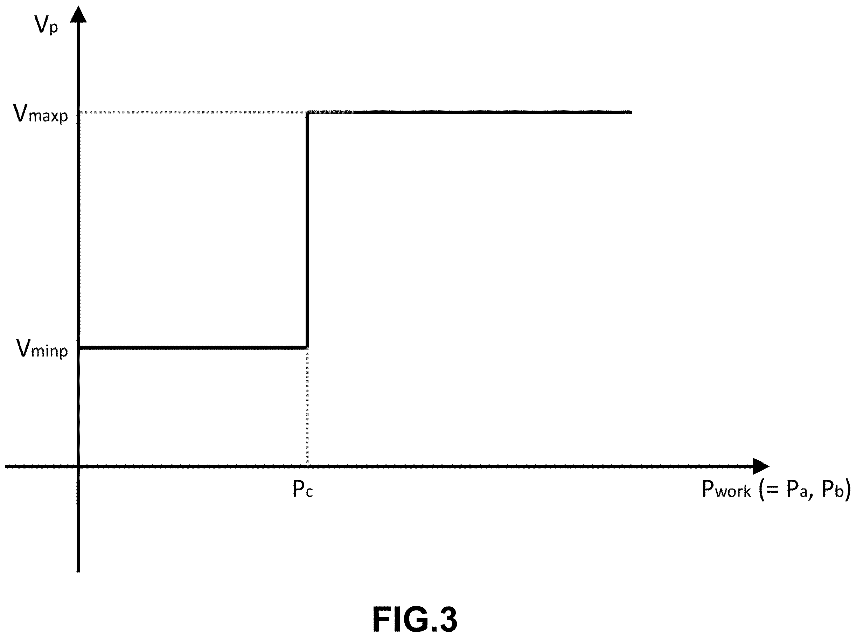

Figure 3 shows the pressure-based displacement as a function of the operational pressure, according to an embodiment of the present invention;

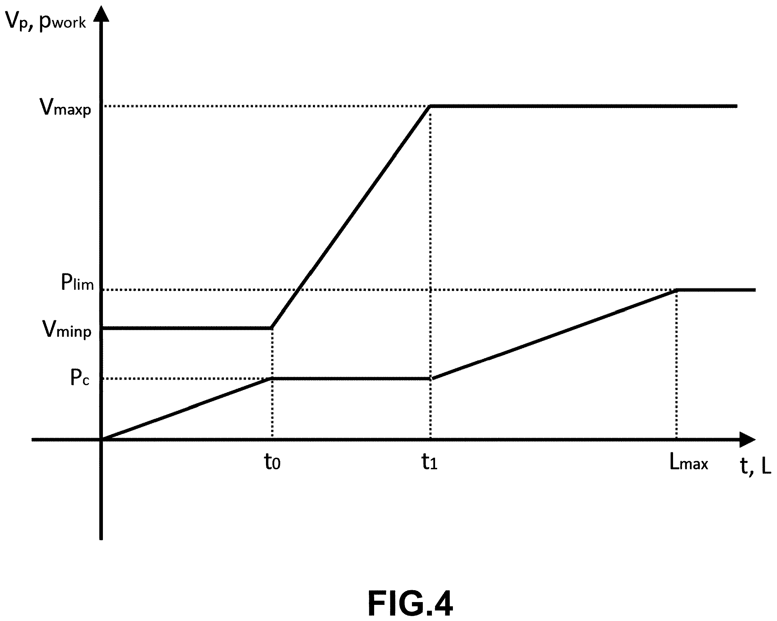

Figure 4 shows the pressure-based displacement and the operational pressure according to Figure 2, as a function of load, or time, in a situation in which the load increases with time; and
Figure 5 shows the speed-based displacement as a function of the travel speed of the work vehicle, according to an embodiment of the present invention.

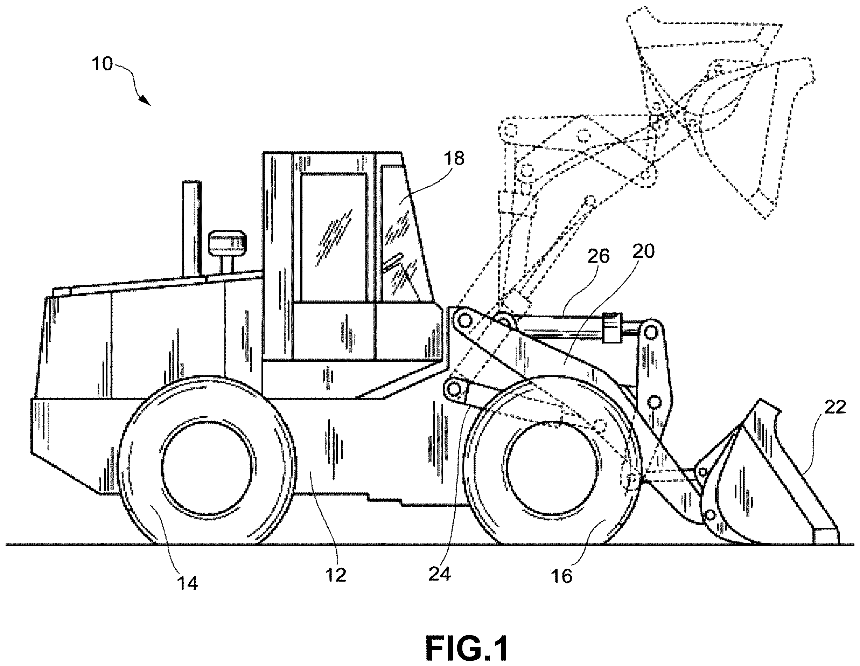

With initial reference to Figure 1, a work vehicle is generally indicated with 10. The work vehicle illustrated in Figure 1 is a so-called compact wheel loader. However, the invention is not limited to such kind of work vehicle, but is applicable to any other kind of work vehicle.

In per-se-known manner, the work vehicle 10 comprises a body or frame 12, a pair of driving wheels 16, a pair of non-driving wheels 14, an operator's cab 18 carried by the body 12, a lift arm 20 attached to the front side of the body 12 and hingedly connected thereto so as to be rotatable about a first axis of rotation directed transversely, a working implement 22, such as for example a bucket, attached to the front ends (free ends) of the lift arm 20 and hingedly connected thereto so as to be rotatable about a second axis of rotation parallel to the first one, a pair of first hydraulic cylinders 24 (only one of which is shown in Figure 1), each of which is interposed between the body 12 and the lift arm 20 and is operable to cause rotary movement of the lift arm 20 relative to the body 12 about the first axis of rotation, and one or two second hydraulic cylinders 26 interposed between the lift arm 20 and the working implement 22 and operable to cause rotary movement of the working implement 22 relative to the lift arm 20 about the second axis of rotation.

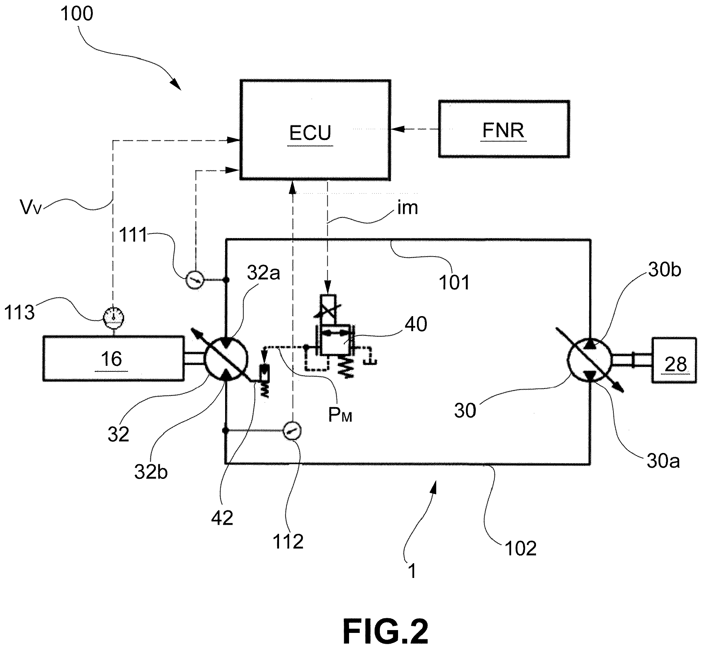

The hydraulic pressure required for driving the driving wheels 16, as well as - when present - for the first and second hydraulic cylinders 24 and 26 to operate the lift arm 20 and the working implement 22, is produced by a hydraulic pump 30 driven by an internal combustion engine 28 (hereinafter simply referred to as engine) of the vehicle, the engine 28 being schematically shown in figure 2.

As illustrated in Figure 2, the engine 28 is used to drive the driving wheels 16 by means of a hydrostatic transmission 100 comprising a hydraulic pump 30 and a hydraulic motor 32 hydraulically connected to each other in such a manner to define a closed hydraulic circuit 1. Therefore, the hydraulic transmission 100 further comprises a forward line 101 arranged to hydraulically connect an outlet 30b of the hydraulic pump 30 to an inlet 32a of the hydraulic motor 32, and a rearward line 102 arranged to hydraulically connect an outlet 32b of the hydraulic motor 32 to an inlet 30a of the hydraulic pump 30 in such a manner to define said closed hydraulic circuit 1.

The hydrostatic transmission 100 further comprises an electronic control unit ECU, known per se, and arranged to control the operation of the hydrostatic transmission 100 and its component as further described below.

The hydraulic pump 30 is mechanically coupled to the engine 28 to be driven by the same, while the hydraulic motor 32 is mechanically connected at least to the driving wheels 16 to drive the same.

In a preferable embodiment of the present invention, the hydraulic pump 30 is an electronically-controlled variable displacement hydraulic pump, whose displacement is varied by a pump spool (not shown, known per se) under control of the electronic control unit ECU, which is configured to generate a pump drive current for a pump solenoid valve (not shown, known per se) that, based on the pump drive current, generates a pump pilot pressure acting on the pump spool to determine the displacement of the hydraulic pump 30. Advantageously, the displacement of the hydraulic pump 30 is controlled so that it is proportional to the number of revolutions (rpm) of the internal combustion engine 28, in such a manner that, when the internal combustion engine 28 is at low-idle (minimal number of revolutions), the hydraulic pump 30 is closed, and the work vehicle 10 is, thus, still. On the contrary, as the number of revolutions of the internal combustion engine 28 increases, the displacement of the hydraulic pump 30 is increased progressively, thus increasing the travel speed uᵥ of the work vehicle 10. Therefore, the final travel speed uᵥ of the work vehicle 10 is a function of the number of revolutions of the internal combustion engine 28 (which is controlled by means of an accelerator pedal), of the displacement of the hydraulic pump 30 (which is a function of the number of revolutions of the internal combustion engine 28) and of the displacement of the hydraulic motor 32 (which is also controlled by the electronic control unit ECU, according to the invention, as further described below).

The hydraulic motor 32 is an electronically-controlled variable displacement hydraulic motor, whose displacement is varied by means of a spool 42, under control of the electronic control unit ECU, which is configured to generate a motor drive current im for a motor solenoid valve 40 that, based on the motor drive current im, generates a pilot pressure pₘ acting on the spool 42 to determine the displacement of the hydraulic motor 32.

According to the invention, the hydrostatic transmission 100 further comprises a first pressure sensor 111, a second pressure sensor 112 and a speed sensor 113.

As shown in figure 2, the first pressure sensor 111 is arranged on the forward line 101 to sense or measure a pressure thereof and send a signal representative of such information to the electronic control unit ECU. Similarly, the second pressure sensor 112 is arranged on the rearward line 102 to sense or measure a pressure thereof and send a signal representative of such information to the electronic control unit ECU. Further sensors may be arranged in association with an accelerator pedal of the work vehicle, and optionally a Forward-Neutral-Reverse switch FNR of the vehicle 10 and a brake pedal of the vehicle, so that information relating to the position of such pedals and switch may be transmitted to the electronic control unit ECU. Similarly, the speed sensor 113 is arranged to sense or measure the travel speed uᵥ of the work vehicle 10 and to provide a signal representative of such travel speed travel speed uᵥ to the electronic control unit ECU.

According to the invention, the speed sensor 113 may preferably be a single trace speed sensor. Equivalently, the speed sensor 113 may be replaced by any other speed-determining device suitable to sense, measure, detect, determine, or receive a piece of relevant data adapted to indicate the travel speed uᵥ of the work vehicle 10 that is known to the person skilled in the art at the relevant date.

The electronic control unit ECU is configured to suitably control the adjustment of the displacement of the hydraulic motor 32, for example by means of a solenoid valve 40, depending on the signals received from said sensors 111, 112, 113. Accordingly, the electronic control unit ECU is coupled, by means of a data-transmitting connection, to said first pressure sensor 111, second pressure sensor 112 and speed sensor 113 to receive from said sensors 111, 112 and 113 signals representative of the respective measurements Pf, p_{b} and uᵥ.

According to the control strategy of the invention, the electronic control unit ECU is configured to control the adjustment of the displacement of the hydraulic motor 32 by setting a commanded displacement V_{cmd} of the hydraulic motor 32 that is equal to the greater of a pressure-based displacement Vₚ and a speed-based displacement Vᵥ, the pressure-based displacement Vₚ being a function of the operational pressure p_{work}, the operational pressure p_{work} being set as either the pressure p_{f} on the forward line 101 of the hydraulic circuit 1, when the work vehicle 10 is moving forward, or the pressure p_{b} on the rearward line 102 of the hydraulic circuit 1, if the work vehicle 10 is moving rearward, and the speed-based displacement Vᵥ being a function of the travel speed uᵥ of the work vehicle 10.

According to a preferred embodiment of the invention, the relationship between the travel speed uᵥ and the speed-based displacement Vᵥ is such that:
i) when the travel speed uᵥ of the work vehicle 10 is smaller than (or equal to) a predetermined first speed threshold v_{c1}, the speed-based displacement Vᵥ is set equal to a first predetermined speed-based displacement Vₘₐₓᵥ;
ii) when the travel speed uᵥ of the work vehicle 10 is greater than the first speed threshold v_{c1} and smaller than (or equal to) a predetermined second speed threshold v_{c2}, the first speed threshold v_{c1} being smaller than the second speed threshold v_{c2}, the speed-based displacement Vᵥ is comprised between the first predetermined speed-based displacement Vₘₐₓᵥ and the second predetermined speed-based displacement Vₘᵢₙᵥ; the second predetermined speed-based displacement Vₘᵢₙᵥ being smaller than the first predetermined speed-based displacement Vₘₐₓᵥ;
iii) when the travel speed uᵥ of the work vehicle 10 is greater than the second speed threshold v_{c2}, the speed-based displacement Vᵥ is set equal to the second predetermined speed-based displacement Vₘᵢₙᵥ.

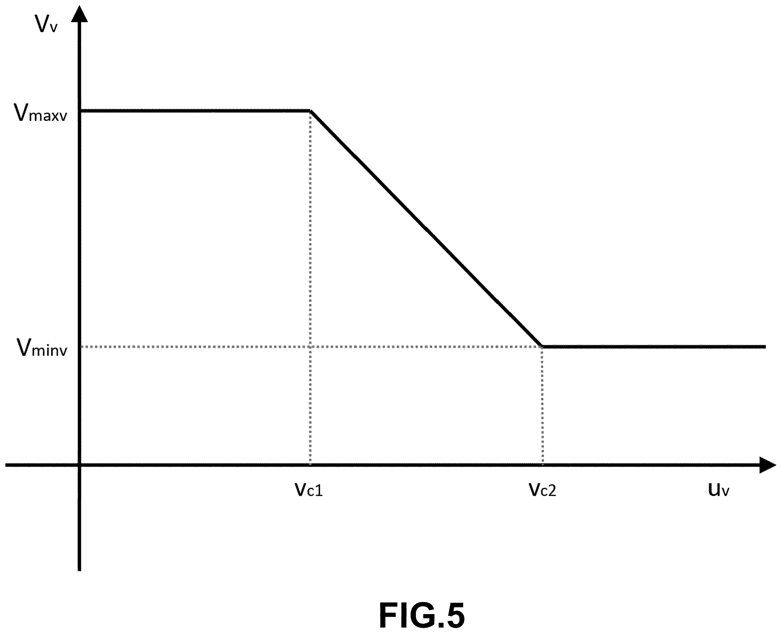

In particular, when the travel speed uᵥ of the work vehicle 10 is greater than the first speed threshold v_{c1} and smaller than (or equal to) the predetermined second speed threshold v_{c2}, the relationship between the travel speed uᵥ of the work vehicle 10 and the speed-based displacement Vᵥ may follow a number of different functions, the value of the speed-based displacement always being comprised, though, between the first predetermined speed-based displacement Vₘₐₓᵥ and the second predetermined speed-based displacement Vₘᵢₙᵥ. In particular, the speed-based displacement Vᵥ may decrease as the travel speed uᵥ of the work vehicle 10 increases within such a range; in the most preferable embodiment of the invention, the speed-based displacement Vᵥ decreases linearly from the first predetermined speed-based displacement Vₘₐₓᵥ to the second predetermined speed-based displacement Vₘᵢₙ, as the travel speed uᵥ of the work vehicle 10 increases from the first speed threshold v_{c1} to the second speed threshold v_{c2}. The most preferred function between the travel speed uᵥ and the speed-based displacement Vᵥ is shown in Figure 5. Alternatively, the speed-based displacement Vᵥ may be set at a fixed value, comprised between the first predetermined speed-based displacement Vₘₐₓᵥ and the second predetermined speed-based displacement Vₘᵢₙᵥ, as the travel speed uᵥ of the work vehicle 10 increases within such a range. Preferably, the first speed threshold v_{c1} is set at about 3 to 5 km/h, for example at about 4 km/h, while the second speed threshold v_{c2} is set at about 5 to 7 km/h, for example at about 6 km/h. Of course, many other functions are allowable, including non-linear functions.

According to a preferred embodiment of the invention, the relationship between the operational pressure p_{work} and the pressure-based displacement Vₚ is such that, when the operational pressure p_{work} is smaller than a predetermined pressure threshold p_{c}, the pressure-based displacement Vₚ is kept equal to a first predetermined pressure-based displacement Vₘᵢₙₚ, such a displacement being determined so as to ensure that the work vehicle 10 is always capable of reaching the maximum travel speed uᵥ. Similarly, when the operational pressure p_{work} is greater than the predetermined pressure threshold p_{c}, the pressure-based displacement Vₚ is set equal to a second predetermined pressure-based displacement Vₘₐₓₚ, the first predetermined pressure-based displacement Vₘᵢₙₚ being smaller than the second predetermined pressure-based displacement Vₘₐₓₚ, and the second predetermined pressure-based displacement Vₘₐₓₚ being set as the maximum displacement that the hydraulic motor 32 can reach by design. Preferably, the predetermined pressure threshold p_{c} is set at about 250 - 310 bar, for example at about 280 bar.

According to a particularly preferable embodiment of the present invention, the electronic control unit ECU is configured such that, when the operational pressure p_{work} is equal to the predetermined pressure threshold p_{c}, the pressure-based displacement Vₚ is controlled, preferably by means of a PID controller, in order to maintain the operational pressure p_{work} equal to the pre-determined pressure threshold p_{c}. In particular, the PID controller is designed in such a manner to calculate the difference between the operational pressure p_{work} and the predetermined pressure threshold p_{c}, such a difference being defined as error (p_{work} - p_{c}), and to set the pressure-based displacement Vₚ as the sum of three different components: the first one being proportional to the error, the second one being proportional to the derivative of said error, and the third one being proportional to the integral of said error. The PID controller may further be enhanced by being provided with an anti-wind-up algorithm to optimize control and limit over-elongation. For example, if the operational pressure p_{work} tends to grow, the pressure-based displacement Vₚ is increased instead, at least within the limit of the second predetermined pressure-based displacement Vₘₐₓₚ, so that the operational pressure p_{work}, on the contrary, does not increase and tends to remain at the level of the predetermined pressure threshold p_{c}. Therefore, if the operational pressure p_{work} tends to increase and the displacement of the hydraulic motor 32 is below the second predetermined pressure-based displacement Vₘₐₓₚ (i.e., it may still be increased) the pressure-based displacement Vₚ is increased to a maximum equal to the second predetermined pressure-based displacement Vₘₐₓₚ. Similarly, if the operational pressure p_{work} tends to decrease, and the displacement of the hydraulic motor 32 is above the first predetermined pressure-based displacement Vₘᵢₙₚ (i.e., it may still be decreased) the pressure-based displacement Vₚ is decreased to a minimum equal to the first predetermined pressure-based displacement Vₘᵢₙₚ.

Preferably, the electronic control unit ECU is further configured to control the operation of the hydrostatic transmission 100 depending on the position of a Forward-Neutral-Reverse switch FNR of the vehicle 10.

The electronic control unit ECU may further be programmed to disable the control logic described above when required by an operator.

According to another aspect of the invention, a method for controlling a hydrostatic transmission 100 according to the invention is also provided. The method comprises at least the steps of setting the operational pressure p_{work}, determining the pressure-based displacement Vₚ and the speed-based displacement Vᵥ of the hydraulic motor 32 and selecting the greater of the two values as a commanded displacement V_{cmd} of the hydraulic motor 32.

In particular, if the work vehicle 10 is moving forward, the operational pressure p_{work} is set as the pressure p_{f} on the forward line 101 of the hydrostatic transmission 100; on the contrary, if the work vehicle 10 is moving rearward, the operational pressure p_{work} is set as the pressure p_{b} on the rearward line 102 of the hydrostatic transmission 100.

Of course, a preliminary step before step a) may be performed to determine whether the work vehicle 10 is moving forward or rearward. Such a preliminary step may comprise processing information relating to the travel speed uᵥ of the work vehicle 10, or, alternatively, receiving an input from an operator of the work vehicle 10.

Once the operational pressure p_{work} has been set, the pressure-based displacement Vₚ of the hydraulic motor 32 is determined as a function of the operational pressure p_{work}.

In a preferred embodiment, the pressure-based displacement Vₚ of the hydraulic motor 32 is determined according to the following sub-steps. First, the operational pressure p_{work} is compared with a predetermined pressure threshold p_{c}, for example a predetermined pressure threshold p_{c} as describe above with reference to the hydrostatic transmission 100. Then, the pressure-based displacement Vₚ is set depending on the result of such comparison: if the operational pressure p_{work} is smaller than the predetermined pressure threshold p_{c}, the pressure-based displacement Vₚ is set equal to the first predetermined pressure-based displacement Vₘᵢₙₚ; on the contrary, if the operational pressure p_{work} is greater than the predetermined pressure threshold p_{c}, the pressure-based displacement Vₚ is set equal to the second predetermined pressure-based displacement Vₘₐₓₚ, the second predetermined pressure-based displacement Vₘₐₓₚ being greater than the first predetermined pressure-based displacement Vₘᵢₙₚ. Furthermore, when
the operational pressure p_{work} is equal to the predetermined pressure threshold p_{c}, a different control logic is applied depending on whether the operational pressure p_{work} tends to increase or decrease, with the aim of keeping such pressure as much as possible stable around the value corresponding to the predetermined pressure threshold p_{c}. Thus, if the operational pressure p_{work} tends to increase, and the displacement of the hydraulic motor 32 is still below the second predetermined pressure-based displacement Vₘₐₓₚ, the pressure-based displacement Vₚ increases up to a maximum equal to the second predetermined pressure-based displacement Vₘₐₓₚ; similarly, if the operational pressure p_{work} tends to decrease, and the displacement of the hydraulic motor 32 is still above the first predetermined pressure-based displacement Vₘᵢₙₚ, the pressure-based displacement Vₚ decreases down to a minimum equal to the first predetermined pressure-based displacement Vₘᵢₙₚ.

As anticipated, the method also comprises the step of determining the speed-based displacement Vᵥ of the hydraulic motor 32. This is performed by determining the speed-based displacement Vᵥ as a function of the travel speed uᵥ of the work vehicle 10. The function defining the relationship between the speed-based displacement Vᵥ and the travel speed uᵥ of the work vehicle 10 is determined according to what already described above with reference to the hydrostatic transmission 100. Therefore, the method may preferably comprise the following sub-steps:
c1) comparing the travel speed uᵥ of the work vehicle 10 with a predetermined first speed threshold v_{c1} and with a predetermined second speed threshold v_{c2}; the first speed threshold v_{c1} being smaller than the second speed threshold Vc2 ;
c2) determining the speed-based displacement Vᵥ as either:
   - a first predetermined speed-based displacement Vₘₐₓᵥ, if the travel speed uᵥ of the work vehicle 10 is smaller than the predetermined first speed threshold v_{c1};
   - a second predetermined speed-based displacement Vₘᵢₙᵥ, if the travel speed uᵥ of the work vehicle 10 is greater than the predetermined second speed threshold v_{c2}; the second pre-determined speed-based displacement Vₘᵢₙᵥ being smaller than the first predetermined speed-based displacement Vₘₐₓᵥ; or
   - a displacement value comprised between the first predetermined speed-based displacement Vₘₐₓᵥ and the second predetermined speed-based displacement Vₘᵢₙᵥ, if the travel speed uᵥ of the work vehicle 10 is comprised between the first speed threshold v_{c1} and the second speed threshold v_{c2}. More preferably, when the travel speed uᵥ of the work vehicle 10 is comprised between the first speed threshold vc1 and the second speed threshold v_{c2}, the speed-based displacement Vᵥ decreases as the travel speed uᵥ of the work vehicle 10 increases.

In a preferable embodiment of the invention, the first predetermined speed-based displacement Vₘₐₓᵥ is set at about the same value of the second predetermined pressure-based displacement Vₘₐₓₚ and the second predetermined speed-based displacement Vₘᵢₙᵥ is set at about the same value of the first predetermined pressure-based displacement Vₘᵢₙₚ.

Of course, as the person skilled in the art may have implicitly derived from the description, the steps of comparing values may be replaced, in a manner known per se, by analogous steps in which the absolute values of such values are instead compared. For example, the method may further comprise the sub-steps of:
d1) determining the absolute value of the pressure-based displacement Vₚ;
d2) determining the absolute value of the speed-based displacement Vᵥ;
d3) comparing the absolute value of the pressure-based displacement Vₚ with the absolute value of the speed-based displacement Vᵥ;
d4) setting the commanded displacement V_{cmd} of the hydraulic motor 32 as the greater of the absolute value of the pressure-based displacement Vₚ and the absolute value of the speed-based displacement Vᵥ.

The final step of the method comprises the operation of controlling the adjustment of the displacement of the hydraulic motor 32 by setting a commanded displacement V_{cmd} of the hydraulic motor 32 as the greater of the pressure-based displacement Vₚ so determined and the speed-based displacement Vᵥ so determined.

By virtue of the present invention, therefore, it is possible to control a hydrostatic transmission, and a work vehicle, in order to prevent the undesired drawbacks of the prior art.

In particular, the hydrostatic transmission according to the invention gathers all the advantages of the speed-based and of the pressure- based controls, namely
1) enhanced controllability of the work vehicle travels speed when it is moving downhill, since the motor displacement is forced at a high value by the speed-based control, until the work vehicle travel speed is within the first speed threshold;
2) quick acceleration of the work vehicle from standstill, since the motor displacement is forced at a high value by the speed-based control and does not need that the pressure-based control reacts in order to reach as quickly as possible the maximum displacement;
3) quick torque increase when the work vehicle is moving uphill and while digging, by virtue of the pressure-based control that increases the motor displacement before the action of the speed-based control;
4) substantially higher controllability - with respect to the prior art - during pick and place operations, wherein the work vehicle travel speed and the pressure of the hydrostatic transmission are very low and so the displacement is maximum ensuring the best resolution in vehicle movement. Naturally, the principle of the invention remaining unchanged, the embodiments and the constructional details may vary widely from those described and illustrated purely by way of non-limiting example, without thereby departing from the scope of the invention as defined in the appended claims.

## Claims

1. Hydrostatic transmission (100) for a work vehicle (10), the hydrostatic transmission (100) comprising:
a hydraulic pump (30) arranged to be mechanically coupled to an internal combustion engine (28) of the vehicle (10) ;
an electronically-controlled variable displacement hydraulic motor (32) arranged to be mechanically connected at least to driving wheels (16) of the vehicle (10); and
an electronic control unit (ECU);
wherein the hydraulic pump (30) and the hydraulic motor (32) are hydraulically connected to each other to define a closed hydraulic circuit (1);
wherein the hydraulic transmission (100) further comprises:
a first pressure sensor (111) arranged to measure the pressure (p_{f}) on a forward line (101) of the hydraulic circuit (1) and to provide a signal representative of such pressure (p_{f}) to the electronic control unit (ECU);
a second pressure sensor (112) arranged to measure the pressure (p_{b}) on a rearward line (102) of the hydraulic circuit (1) and to provide a signal representative of such pressure (p_{b}) to the electronic control unit (ECU);
a speed sensor (113) arranged to measure the travel speed (uᵥ) of the work vehicle (10) and to provide a signal representative of such speed (uᵥ) to the electronic control unit (ECU); and
in that the electronic control unit (ECU) is coupled to said first pressure sensor (111), second pressure sensor (112) and speed sensor (113) to receive from said sensors (111, 112, 113) signals representative of the respective measurements (p_{f}, p_{b}, uᵥ), and
**characterized in that**
the electronic control unit (ECU) is configured to control the adjustment of the displacement of the hydraulic motor (32) by setting a commanded displacement (V_{cmd}) of the hydraulic motor (32) that is equal to the greater of a pressure-based displacement (Vₚ) and a speed-based displacement (Vᵥ);
wherein the pressure-based displacement (Vₚ) is a function of the operational pressure (p_{work}), the operational pressure (p_{work}) being set as either the pressure (p_{f}) on the forward line (101) of the hydraulic circuit (1), if the work vehicle (10) is moving forward, or the pressure (p_{b}) on the rearward line (102) of the hydraulic circuit (1), if the work vehicle (10) is moving rearward; and
wherein the speed-based displacement (Vᵥ) is a function of the travel speed (uᵥ) of the work vehicle (10);
the electronic control unit (ECU) is configured such that:
i) when the travel speed (uᵥ) of the work vehicle (10) is smaller than a predetermined first speed threshold (v_{c1}), the speed-based displacement (Vᵥ) is set equal to a first predetermined speed-based displacement (Vₘₐₓᵥ);
wherein the electronic control unit (ECU) is further configured such that:
ii) when the travel speed (uᵥ) of the work vehicle (10) is greater than the first speed threshold (v_{c1}) and smaller than a predetermined second speed threshold (v_{c2}), the first speed threshold (v_{c1}) being smaller than the second speed threshold (v_{c2}), the speed-based displacement (Vᵥ) is comprised between the first predetermined speed-based displacement (Vₘₐₓᵥ)and the second predetermined speed-based displacement (Vₘᵢₙᵥ); the second predetermined speed-based displacement (Vₘᵢₙᵥ) being smaller than the first predetermined speed-based displacement (Vₘₐₓᵥ);
iii) when the travel speed (uᵥ) of the work vehicle (10) is greater than the second speed threshold (v_{c2}), the speed-based displacement (Vᵥ) is set equal to the second predetermined speed-based displacement (Vₘᵢₙᵥ).

2. Hydrostatic transmission according to claim 1, wherein the electronic control unit (ECU) is configured such that, when the travel speed (uᵥ) of the work vehicle (10) is greater than the first speed threshold (v_{c1}) and smaller than the predetermined second speed threshold (v_{c2}), the speed-based displacement (Vᵥ) is decreased as the travel speed (uᵥ) of the work vehicle (10) increases.

3. Hydrostatic transmission according to any one of the preceding claims, wherein, the electronic control unit (ECU) is configured such that, when the operational pressure (p_{work}) is smaller than a predetermined pressure threshold (p_{c}), the pressure-based displacement (Vₚ) is kept equal to a first predetermined pressure-based displacement (Vₘᵢₙₚ) and wherein, the electronic control unit (ECU) is configured such that, when the operational pressure (p_{work}) is greater than the predetermined pressure threshold (p_{c}), the pressure-based displacement (Vₚ) is set equal to a second predetermined pressure-based displacement (Vₘₐₓₚ), the first predetermined pressure-based displacement (Vₘᵢₙₚ) being smaller than the second predetermined pressure-based displacement (Vₘₐₓₚ).

4. Hydrostatic transmission according to claim 3, wherein, the electronic control unit (ECU) is configured such that, when the operational pressure (p_{work}) is equal to the predetermined pressure threshold (p_{c}):
i) if the operational pressure (p_{work}) tends to increase, and the displacement of the hydraulic motor (32) is below the second predetermined pressure-based displacement (Vₘₐₓₚ), the pressure-based displacement (Vₚ) increases to a maximum equal to the second predetermined pressure-based displacement (Vₘₐₓₚ);
ii) if the operational pressure (p_{work}) tends to decrease, and the displacement of the hydraulic motor (32) is above the first predetermined pressure-based displacement (Vₘᵢₙₚ), the pressure-based displacement (Vₚ) decreases to a minimum equal to the first predetermined pressure-based displacement (Vₘᵢₙₚ).

5. Hydrostatic transmission according to claim 4, wherein the electronic control unit (ECU) further comprises a PID controller, and wherein, when the operational pressure (p_{work}) is equal to, or greater than, the predetermined pressure threshold (p_{c}) the pressure-based displacement (Vₚ) is controlled by means of said PID controller.

6. Hydrostatic transmission according to any one of the preceding claims, wherein the electronic control unit (ECU) is further configured to control the operation of the hydrostatic transmission (100) depending on the position of a Forward-Neutral-Reverse switch (FNR) of the work vehicle (10) .

7. Hydrostatic transmission according to any one of the preceding claims, further comprising a motor displacement adjustment device (42) associated to the hydraulic motor (32) for adjusting the displacement thereof, and a motor solenoid valve (40) arranged to receive a drive current (im), generated by the electronic control unit (ECU) and representative of the commanded displacement (V_{cmd}), and to generate, depending on said drive current (im), a pilot pressure (pₘ) for controlling the displacement of the motor displacement adjustment device (42).

8. Hydrostatic transmission according to any one of the preceding claims, wherein the hydraulic pump (30) is an electronically-controlled variable displacement hydraulic pump (30).

9. Hydrostatic transmission according to claim 8 further comprising a pump displacement adjustment device associated to the hydraulic pump (30) for adjusting the displacement thereof, and a pump solenoid valve arranged to receive a pump drive current, generated by the electronic control unit (ECU) and representative of the pump commanded displacement (Vcmd), and to generate, depending on said pump drive current, a pump pilot pressure for controlling the displacement of the pump displacement adjustment device.

10. Hydrostatic transmission according to claim 8 or to claim 9, wherein the electronic control unit (ECU) is configured to control the displacement of the hydraulic pump (30) so that it increases as the number of revolutions (rpm) of the internal combustion engine (28) increases.

11. Work vehicle (10), in particular compact wheel loader, comprising driving wheels (16), a hydrostatic transmission (100) according to any one of the preceding claims, and an internal combustion engine (28) mechanically coupled to the hydraulic pump (30) of said hydrostatic transmission (100), wherein said driving wheels (16) are mechanically coupled to the hydraulic motor (32) of the hydrostatic transmission (100) .

12. Method for controlling a hydrostatic transmission (100) according to any one of claims from 1 to 10, comprising the steps of:
a) if the work vehicle (10) is moving forward, setting the pressure (p_{f}) on the forward line (101) of the hydrostatic transmission (100) as the operational pressure (p_{work}); if the work vehicle (10) is moving rearward setting the pressure (p_{b}) on the rearward line (102) of the hydrostatic transmission (100) as the operational pressure (p_{work});
b) determining the pressure-based displacement (Vₚ) of the hydraulic motor (32) as a function of the operational pressure (p_{work});
c) determining the speed-based displacement (Vᵥ) of the hydraulic motor (32) as a function of the travel speed (uᵥ) of the work vehicle (10);
d) controlling the adjustment of the displacement of the hydraulic motor (32) by setting a commanded displacement (V_{cmd}) of the hydraulic motor (32) as the greater of the pressure-based displacement (Vₚ) and the speed-based displacement (Vᵥ) so determined.

13. Method according to claim 12, wherein the step b) comprises the following sub-steps:
b1) comparing the operational pressure (p_{work}) with a predetermined pressure threshold (p_{c}); and
b2) setting the pressure-based displacement (Vₚ) as equal to a first predetermined pressure-based displacement (Vₘᵢₙₚ), if the operational pressure (p_{work}) is smaller than the predetermined pressure threshold (p_{c});
b2') setting the pressure-based displacement (Vₚ) as equal to a second predetermined pressure-based displacement (Vₘₐₓₚ), if the operational pressure (p_{work}) is greater than the predetermined pressure threshold (p_{c}), wherein the second predetermined pressure-based displacement (Vₘₐₓₚ) is greater than the first predetermined pressure-based displacement (Vₘᵢₙₚ) ; and
b2") if the operational pressure (p_{work}) is equal to the predetermined pressure threshold (p_{c}):
i) if the operational pressure (p_{work}) tends to increase, and the displacement of the hydraulic motor (32) is below the second predetermined pressure-based displacement (Vₘₐₓₚ), increasing the pressure-based displacement (Vₚ) up to a maximum equal to the second predetermined pressure-based displacement (Vₘₐₓₚ);
ii) if the operational pressure (p_{work}) tends to decrease, and the displacement of the hydraulic motor (32) is above the first predetermined pressure-based displacement (Vₘᵢₙₚ), decreasing the pressure-based displacement (Vₚ) down to a minimum equal to the first predetermined pressure-based displacement (Vₘᵢₙₚ) .

14. Method according to claim 12 or claim 13, wherein the step c) comprises the following sub-steps:
c1) comparing the travel speed (uᵥ) of the work vehicle (10) with a predetermined first speed threshold (v_{c1}) and with a predetermined second speed threshold (v_{c2}); the first speed threshold (v_{c1}) being smaller than the second speed threshold (v_{c2});
c2) determining a speed-based displacement (Vᵥ) as either:
- a first predetermined speed-based displacement (Vₘₐₓᵥ), if the travel speed (uᵥ) of the work vehicle (10) is smaller than the predetermined first speed threshold (v_{c1});
- a second predetermined speed-based displacement (Vₘᵢₙᵥ), if the travel speed (uᵥ) of the work vehicle (10) is greater than the predetermined second speed threshold (v_{c2}); the second predetermined speed-based displacement (Vₘᵢₙᵥ) being smaller than the first predetermined speed-based displacement (Vₘₐₓᵥ); or
- a displacement value comprised between the first predetermined speed-based displacement (Vₘₐₓᵥ) and the second predetermined speed-based displacement (Vₘᵢₙᵥ), if the travel speed (uᵥ) of the work vehicle (10) is comprised between the first speed threshold (v_{c1}) and the second speed threshold (v_{c2}).

15. Method according to claim 14, wherein the determination of the speed-based displacement (Vᵥ) in said sub-step c2) is carried out so that, when the travel speed (uᵥ) of the work vehicle (10) is comprised between the first speed threshold (v_{c1}) and the second speed threshold (v_{c2}), the speed-based displacement (Vᵥ) decreases as the travel speed (uᵥ) of the work vehicle (10) increases.

## Patentansprüche

1. Hydrostatisches Getriebe (100) für ein Arbeitsfahrzeug (10), wobei das hydrostatische Getriebe (100) aufweist:
eine Hydraulikpumpe (30), die dazu eingerichtet ist, mit einem Verbrennungsmotor (28) des Fahrzeugs (10) mechanisch gekoppelt zu sein;
einen elektronisch gesteuerten Verstell-Hydraulikmotor (32), der dazu eingerichtet ist, zumindest mit Antriebsrädern (16) des Fahrzeugs (10) mechanisch gekoppelt zu sein; und
eine elektronische Steuereinheit (ECU);
wobei die Hydraulikpumpe (30) und der Hydraulikmotor (32) miteinander hydraulisch verbunden sind, um einen geschlossenen Hydraulikschaltkreis (1) zu bilden;
wobei das hydrostatische Getriebe (100) weiterhin aufweist:
einen ersten Drucksensor (111), der dazu eingerichtet ist, den Druck (p_{f}) in einer Vorlaufleitung (101) des Hydraulikschaltkreises (1) zu messen und ein Signal, das charakteristisch für einen solchen Druck (p_{f}) ist, der elektronischen Steuereinheit (ECU) zuzuführen;
einen zweiten Drucksensor (112), der dazu eigerichtet ist, den Druck (p_{b}) in einer Rücklaufleitung (102) des Hydraulikschaltkreises (1) zu messen und ein Signal, das charakteristisch für einen solchen Druck (p_{b}) ist, der elektronischen Steuereinheit (ECU) zuzuführen;
einen Geschwindigkeitssensor (113), der dazu eingerichtet ist, die Fahrgeschwindigkeit (uᵥ) des Arbeitsfahrzeugs (10) zu messen und ein Signal, das charakteristisch für eine solche Geschwindigkeit (uᵥ) ist, der elektronischen Steuereinheit (ECU) zuzuführen; und
wobei die elektronische Steuereinheit (ECU) mit dem ersten Drucksensor (111), dem zweiten Drucksensor (112) und dem Geschwindigkeitssensor (113) gekoppelt ist, um von den Sensoren (111, 112, 113) Signale zu erhalten, die charakteristisch für die entsprechenden Messungen (p_{f}, p_{b}, uᵥ) sind,
**dadurch gekennzeichnet, dass**
die elektronische Steuereinheit (ECU) dazu eingerichtet ist, die Anpassung der Verstellung des hydraulischen Motors (32) zu steuern, indem eine Soll-Verstellung (V_{cmd}) des Hydraulikmotors (32) eingestellt wird, die gleich der grö-ßeren aus einer druckbasierten Verstellung (Vₚ) und einer geschwindigkeitsbasierten Verstellung (Vᵥ) ist;
wobei die druckbasierte Verstellung (Vₚ) eine Funktion des Arbeitsdrucks (p_{work}) ist, wobei der Arbeitsdruck (p_{work}) entweder als der Druck (p_{f}) in der Vorlaufleitung (101) des Hydraulikschaltkreises (1) eingestellt wird, wenn sich das Arbeitsfahrzeug (10) vorwärts bewegt, oder als der Druck (p_{b}) in der Rücklaufleitung (102) des Hydraulikschaltkreises (1) eingestellt wird, wenn sich das Arbeitsfahrzeug (10) rückwärts bewegt; und
wobei die geschwindigkeitsbasierte Verstellung (Vᵥ) eine Funktion der Fahrgeschwindigkeit (uᵥ) des Arbeitsfahrzeugs (10) ist;
wobei die elektronische Steuereinheit (ECU) zu Folgendem eingerichtet ist:
i) wenn die Fahrgeschwindigkeit (uᵥ) des Arbeitsfahrzeugs (10) geringer als ein vorbestimmter erster Geschwindigkeits-Schwellenwert (V_{c1}) ist, wird die geschwindigkeitsbasierte Verstellung (Vᵥ) gleich einer ersten vorbestimmten geschwindigkeitsbasierten Verstellung (Vₘₐₓᵥ) eingestellt; wobei die elektronische Steuereinheit (ECU) weiterhin zu Folgendem eingerichtet ist:
ii) wenn die Fahrgeschwindigkeit (uᵥ) des Arbeitsfahrzeugs (10) größer als der erste Geschwindigkeits-Schwellenwert (v_{c1}) und kleiner als ein vorbestimmter zweiter Geschwindigkeits-Schwellenwert (v_{c2}) ist, wobei der erste Geschwindigkeits-Schwellenwert (v_{c1}) kleiner als der zweite Geschwindigkeits-Schwellenwert (v_{c2}) ist, liegt die geschwindigkeitsbasierte Verstellung (Vᵥ) zwischen der ersten vorbestimmten geschwindigkeitsbasierten Verstellung (Vₘₐₓᵥ) und der zweiten vorbestimmten geschwindigkeitsbasierten Verstellung (Vₘᵢₙᵥ); wobei die zweite vorbestimmte geschwindigkeitsbasierte Verstellung (Vₘᵢₙᵥ) geringer als die erste vorbestimmte geschwindigkeitsbasierte Verstellung (Vₘₐₓᵥ) ist;
iii) wenn die Fahrgeschwindigkeit (uᵥ) des Arbeitsfahrzeugs (10) höher als der zweite Geschwindigkeits-Schwellenwert (V_{c2}) ist, wird die geschwindigkeitsbasierte Verstellung (Vᵥ) gleich der zweiten vorbestimmten geschwindigkeitsbasierten Verstellung (Vₘᵢₙᵥ) eingestellt.

2. Hydrostatisches Getriebe nach Anspruch 1, wobei die elektronische Steuereinheit (ECU) dazu eingerichtet ist, dass, wenn die Fahrgeschwindigkeit (uᵥ) des Arbeitsfahrzeugs (10) größer als der erste Geschwindigkeits-Schwellenwert (v_{c1}) und kleiner als der vorbestimmte zweite Geschwindigkeits-Schwellenwert (v_{c2}) ist, die geschwindigkeitsbasierte Verstellung (Vᵥ) verringert wird, während die Fahrgeschwindigkeit (uᵥ) des Arbeitsfahrzeugs (10) zunimmt.

3. Hydrostatisches Getriebe nach einem der vorhergehenden Ansprüche, wobei die elektronische Steuereinheit (ECU) dazu eingerichtet ist, dass, wenn der Arbeitsdruck (p_{work}) geringer als ein vorbestimmter Druck-Schwellenwert (p_{c}) ist, die druckbasierte Verstellung (Vₚ) gleich einer ersten vorbestimmten druckbasierten Verstellung (Vₘᵢₙₚ) gehalten wird, und wobei die elektronische Steuereinheit (ECU) dazu eingerichtet ist, dass, wenn der Arbeitsdruck (p_{work}) größer als der vorbestimmte Druck-Schwellenwert (p_{c}) ist, die druckbasierte Verstellung (Vₚ) gleich einer zweiten vorbestimmten druckbasierten Verstellung (Vₘₐₓₚ) eingestellt wird, wobei die erste vorbestimmte druckbasierte Verstellung (Vₘᵢₙₚ) kleiner als die zweite vorbestimmte druckbasierte Verstellung (Vₘₐₓₚ) ist.

4. Hydrostatisches Getriebe nach Anspruch 3, wobei die elektronische Steuereinheit (ECU) dazu eingerichtet ist, dass, wenn der Arbeitsdruck (p_{work}) gleich dem vorbestimmen Druck-Schwellenwert (p_{c}) ist:
i) wenn der Arbeitsdruck (p_{work}) tendenziell zunimmt, und die Verstellung des Hydraulikmotors (32) unter der zweiten vorbestimmten druckbasierten Verstellung (Vₘₐₓₚ) liegt, die druckbasierte Verstellung (Vₚ) bis zu einem Maximum gleich der zweiten vorbestimmten druckbasierten Verstellung (Vₘₐₓₚ) zunimmt;
ii) wenn der Arbeitsdruck (p_{work}) tendenziell abnimmt, und die Verstellung des Hydraulikmotors (32) über der ersten vorbestimmten druckbasierten Verstellung (Vₘᵢₙₚ) liegt, die druckbasierte Verstellung (Vₚ) bis zu einem Minimum gleich der ersten vorbestimmten druckbasierten Verstellung (Vₘᵢₙₚ) abnimmt.

5. Hydrostatisches Getriebe nach Anspruch 4, wobei die elektronische Steuereinheit (ECU) weiterhin eine PID-Steuerung umfasst, und wobei, wenn der Arbeitsdruck (p_{work}) gleich oder größer dem vorbestimmten Druck-Schwellenwert (p_{c}) ist, die druckbasierte Verstellung (Vₚ) mittels der PID-Steuerung gesteuert wird.

6. Hydrostatisches Getriebe nach einem der vorhergehenden Ansprüche, wobei die elektronische Steuereinheit (ECU) weiterhin dazu eingerichtet ist, den Betrieb des hydrostatischen Getriebes (100) in Abhängigkeit von der Stellung einer Vorwärts-Neutral-Rückwärts-Schaltung (FNR) des Arbeitsfahrzeugs (10) zu steuern.

7. Hydrostatisches Getriebe nach einem der vorhergehenden Ansprüche, weiterhin aufweisend eine Motor-Verstell-Anpassungsvorrichtung (42), die dem Hydraulikmotor (32) zur Anpassung der Verstellung desselben zugeordnet ist, und ein Motor-Magnetventil (40), das dazu eingerichtet ist, einen Steuerstrom (im) zu erhalten, der von der elektronischen Steuereinheit (ECU) erzeugt wird und der charakteristisch für die Soll-Verstellung (V_{cmd}) ist, und in Abhängigkeit von dem Steuerstrom (im) einen Pilotdruck (pₘ) zur Steuerung der Verstellung der Motor-Verstell-Anpassungsvorrichtung (42) zu erzeugen.

8. Hydrostatisches Getriebe nach einem der vorhergehenden Ansprüche, wobei die Hydraulikpumpe (30) eine elektronisch gesteuerte Verstell-Hydraulikpumpe (30) ist.

9. Hydrostatisches Getriebe nach Anspruch 8, weiterhin aufweisend eine Pumpen-Verstell-Anpassungsvorrichtung, die der Hydraulikpumpe (30) zur Anpassung der Verstellung derselben zugeordnet ist, und ein Pumpen-Magnetventil, das dazu eingerichtet ist, einen Pumpen-Steuerstrom zu erhalten, der von der elektronischen Steuereinheit (ECU) erzeugt wird und der charakteristisch für die Soll-Verstellung (V_{cmd}) der Pumpe ist, und in Abhängigkeit von dem Pumpen-Steuerstrom einen Pumpen-Pilotdruck zur Steuerung der Verstellung der Pumpen-Verstell-Anpassungsvorrichtung zu erzeugen.

10. Hydrostatisches Getriebe nach Anspruch 8 oder nach Anspruch 9, wobei die elektronische Steuereinheit (ECU) dazu eingerichtet ist, die Verstellung der Hydraulikpumpe (30) derart zu steuern, dass dieselbe zunimmt, wenn die Drehzahl (rpm) des Verbrennungsmotors (28) zunimmt.

11. Arbeitsfahrzeug (10), insbesondere Kompaktradlader, mit Antriebsrädern (16), einem hydrostatischen Getriebe (100) nach einem der vorhergehenden Ansprüche, und einem Verbrennungsmotor (28), der mit der Hydraulikpumpe (30) des hydrostatischen Getriebes (100) mechanisch gekoppelt ist, wobei die Antriebsräder (16) mit dem Hydraulikmotor (32) des hydrostatischen Getriebes (100) mechanisch gekoppelt sind.

12. Verfahren zur Steuerung eines hydrostatischen Getriebes (100) nach einem der Ansprüche 1 bis 10, mit den folgenden Schritten:
a) wenn das Arbeitsfahrzeug (10) vorwärts fährt, Einstellen des Drucks (p_{f}) in der Vorlaufleitung (101) des hydrostatischen Getriebes (100) als den Arbeitsdruck (p_{work}); wenn das Arbeitsfahrzeug (10) rückwärts fährt, Einstellen des Drucks (p_{b}) in der Rücklaufleitung (102) des hydrostatischen Getriebes (100) als den Arbeitsdruck (p_{work});
b) Bestimmen der druckbasierten Verstellung (Vₚ) des Hydraulikmotors (32) als eine Funktion des Arbeitsdrucks (p_{work});
c) Bestimmen der geschwindigkeitsbasierten Verstellung (Vᵥ) des Hydraulikmotors (32) als eine Funktion der Fahrgeschwindigkeit (uᵥ) des Arbeitsfahrzeugs (10);
d) Steuern der Anpassung der Verstellung des Hydraulikmotors (32) durch das Einstellen einer Soll-Verstellung (V_{cmd}) des Hydraulikmotors (32) als die grö-ßere aus der so bestimmten druckbasierten Verstellung (Vₚ) und der so bestimmten geschwindigkeitsbasierten Verstellung (Vᵥ).

13. Verfahren nach Anspruch 12, wobei der Schritt b) die folgenden Teil-Schritte umfasst:
b1) Vergleichen des Arbeitsdrucks (p_{work}) mit einem vorbestimmten Druck-Schwellenwert (p_{c}); und
b2) Einstellen der druckbasierten Verstellung (Vₚ) gleich einer ersten vorbestimmten druckbasierten Verstellung (Vₘᵢₙₚ), wenn der Arbeitsdruck (p_{work}) geringer als der vorbestimmte Druck-Schwellenwert (p_{c}) ist;
b2') Einstellen der druckbasierten Verstellung (Vₚ) gleich einer zweiten vorbestimmten druckbasierten Verstellung (Vₘₐₓₚ), wenn der Arbeitsdruck (p_{work}) größer als der vorbestimmte Druck-Schwellenwert (p_{c}) ist, wobei die zweite vorbestimmte druckbasierte Verstellung (Vₘₐₓₚ) größer als die erste vorbestimmte druckbasierte Verstellung (Vₘᵢₙₚ) ist; und
b2") wenn der Arbeitsdruck (p_{work}) gleich dem vorbestimmten Druck-Schwellenwert (p_{c}) ist:
i) wenn der Arbeitsdruck (p_{work}) tendenziell zunimmt, und die Verstellung des Hydraulikmotors (32) unter der zweiten vorbestimmten druckbasierten Verstellung (Vₘₐₓₚ) liegt, Vergrößern der druckbasierten Verstellung (Vₚ) bis zu einem Maximum gleich der zweiten vorbestimmten druckbasierten Verstellung (Vₘₐₓₚ);
ii) wenn der Arbeitsdruck (p_{work}) tendenziell abnimmt, und die Verstellung des Hydraulikmotors (32) über der ersten vorbestimmten druckbasierten Verstellung (Vₘᵢₙₚ) liegt, Verringern der druckbasierten Verstellung (Vₚ) bis zu einem Minimum gleich der ersten vorbestimmten druckbasierten Verstellung (Vₘᵢₙₚ).

14. Verfahren nach Anspruch 12 oder Anspruch 13, wobei der Schritt c) die folgenden Teil-Schritte umfasst:
c1) Vergleichen der Fahrgeschwindigkeit (uᵥ) des Arbeitsfahrzeugs (10) mit einem vorbestimmten ersten Geschwindigkeits-Schwellenwert (v_{c1}) und mit einem vorbestimmten zweiten Geschwindigkeits-Schwellenwert (v_{c2}); wobei der erste Geschwindigkeits-Schwellenwert (v_{c1}) kleiner als der zweite Geschwindigkeits-Schwellenwert (v_{c2}) ist;
c2) Bestimmen einer geschwindigkeitsbasierten Verstellung (Vᵥ) entweder als:
- eine erste vorbestimmte geschwindigkeitsbasierte Verstellung (Vₘₐₓᵥ), wenn die Fahrgeschwindigkeit (uᵥ) des Arbeitsfahrzeugs (10) kleiner als der vorbestimmte erste Geschwindigkeits-Schwellenwert (v_{c1}) ist;
- eine zweite vorbestimmte geschwindigkeitsbasierte Verstellung (Vₘᵢₙᵥ), wenn die Fahrgeschwindigkeit (uᵥ) des Arbeitsfahrzeugs (10) größer als der vorbestimmte zweite Geschwindigkeits-Schwellenwert (v_{c2}) ist; wobei die zweite vorbestimmte geschwindigkeitsbasierte Verstellung (Vₘᵢₙᵥ) kleiner als die erste vorbestimmte geschwindigkeitsbasierte Verstellung (Vₘₐₓᵥ) ist; oder
- einen Verstellwert, der zwischen der ersten vorbestimmten geschwindigkeitsbasierten Verstellung (Vₘₐₓᵥ) und der zweiten vorbestimmten geschwindigkeitsbasierten Verstellung (Vₘᵢₙᵥ) liegt, wenn die Fahrgeschwindigkeit (uᵥ) des Arbeitsfahrzeugs (10) zwischen dem ersten Geschwindigkeits-Schwellenwert (v_{c1}) und dem zweiten Geschwindigkeits-Schwellenwert (v_{c2}) liegt.

15. Verfahren nach Anspruch 14, wobei die Bestimmung der geschwindigkeitsbasierten Verstellung (Vᵥ) in dem Teil-Schritt c2) derart ausgeführt wird, dass, wenn die Fahrgeschwindigkeit (uᵥ) des Arbeitsfahrzeugs (10) zwischen dem ersten Geschwindigkeits-Schwellenwert (v_{c1}) und dem zweiten Geschwindigkeits-Schwellenwert (v_{c2}) liegt, die geschwindigkeitsbasierte Verstellung (Vᵥ) abnimmt, wenn die Fahrgeschwindigkeit (uᵥ) des Arbeitsfahrzeugs (10) zunimmt.

## Revendications

1. Transmission hydrostatique (100) pour un véhicule de travail (10), ladite transmission hydrostatique (100) comprenant :
une pompe hydraulique (30) agencée pour être couplée mécaniquement à un moteur à combustion interne (28) du véhicule (10) ;
un moteur hydraulique à cylindrée variable à commande électronique (32) agencé pour être raccordé mécaniquement au moins aux roues motrices (16) du véhicule (10) ; et
une unité de commande électronique (ECU) ;
dans laquelle la pompe hydraulique (30) et le moteur hydraulique (32) sont raccordés hydrauliquement entre eux pour définir un circuit hydraulique fermé (1) ;
dans laquelle la transmission hydraulique (100) comprend en outre :
un premier capteur de pression (111) agencé pour mesurer la pression (p_{f}) sur une conduite avant (101) du circuit hydraulique (1) et pour fournir un signal représentatif d'une telle pression (p_{f}) à l'unité de commande électronique (ECU) ;
un second capteur de pression (112) agencé pour mesurer la pression (p_{b}) sur une conduite arrière (102) du circuit hydraulique (1) et pour fournir un signal représentatif d'une telle pression (p_{b}) à l'unité de commande électronique (ECU) ;
un capteur de vitesse (113) agencé pour mesurer la vitesse de déplacement (uᵥ) du véhicule de travail (10) et pour fournir un signal représentatif d'une telle vitesse (uᵥ) à l'unité de commande électronique (ECU) ; et
en ce que l'unité de commande électronique (ECU) est couplée auxdits premier capteur de pression (111), second capteur de pression (112) et capteur de vitesse (113) pour recevoir desdits capteurs (111, 112, 113) des signaux représentatifs des mesures respectives (Pf, P_{b}, Uᵥ), et
**caractérisée en ce que** l'unité de commande électronique (ECU) est configurée pour contrôler le réglage de la cylindrée du moteur hydraulique (32) en réglant une cylindrée commandée (V_{cmd}) du moteur hydraulique (32) qui est égale à la cylindrée basée sur la pression (Vₚ) la plus élevée et une cylindrée basée sur la vitesse (Vᵥ) ;
dans laquelle la cylindrée basée sur la pression (Vₚ) est fonction de la pression de fonctionnement (P_{work}), la pression de fonctionnement (P_{work}) étant réglée soit comme la pression (p_{f}) sur la conduite avant (101) du circuit hydraulique (1), si le véhicule de travail (10) avance, soit comme la pression (p_{b}) sur la conduite arrière (102) du circuit hydraulique (1), si le véhicule de travail (10) recule ; et
dans laquelle la cylindrée basée sur la vitesse (Vᵥ) est fonction de la vitesse de déplacement (uᵥ) du véhicule de travail (10) ;
l'unité de commande électronique (ECU) est configurée de telle sorte que :
i) lorsque la vitesse de déplacement (uᵥ) du véhicule de travail (10) est inférieure à un premier seuil de vitesse prédéterminé (v_{c1}), la cylindrée basée sur la vitesse (Vᵥ) est définie comme étant égale à une première cylindrée basée sur la vitesse prédéterminée (Vₘₐₓᵥ);
dans laquelle l'unité de commande électronique (ECU) est configurée de telle sorte que :
ii) lorsque la vitesse de déplacement (uᵥ) du véhicule de travail (10) est supérieure au premier seuil de vitesse (v_{c1}) et inférieure à un second seuil de vitesse prédéterminé (v_{c2}), le premier seuil de vitesse (v_{c1}) étant inférieur au second seuil de vitesse (V_{c2}), la cylindrée basée sur la vitesse (Vᵥ) est comprise entre la première cylindrée basée sur la vitesse prédéterminée (Vₘₐₓᵥ) et la seconde cylindrée basée sur la vitesse prédéterminée (Vₘᵢₙᵥ) ; la seconde cylindrée basée sur la vitesse prédéterminée (Vₘᵢₙᵥ) étant inférieure à la seconde cylindrée basée sur la vitesse prédéterminée (Vmaxv) ;
iii) lorsque la vitesse de déplacement (uᵥ) du véhicule de travail (10) est supérieure à un second seuil de vitesse (v_{c2}), la cylindrée basée sur la vitesse (vᵥ) est définie comme étant égale à la seconde cylindrée basée sur la vitesse prédéterminée (Vₘᵢₙᵥ)

2. Transmission hydrostatique selon la Revendication 1, dans laquelle l'unité de commande électronique (ECU) est configurée de telle sorte que, lorsque la vitesse de déplacement (uv) du véhicule de travail (10) est supérieure au premier seuil de vitesse (vc1) et inférieure au second seuil de vitesse prédéterminé (vc2), la cylindrée basée sur la vitesse (Vv) diminue à mesure que la vitesse de déplacement (uv) du véhicule de travail (10) augmente.

3. Transmission hydrostatique selon l'une quelconque des revendications précédentes, dans laquelle l'unité de commande électronique (ECU) est configurée de telle sorte que, lorsque la pression de fonctionnement (P_{work}) est inférieure à un seuil de pression prédéterminé (pc), la cylindrée basée sur la pression (Vₚ) est maintenue égale à une première cylindrée basée sur la pression prédéterminée (Vₘᵢₙₚ) et dans laquelle l'unité de commande électronique (ECU) est configurée de telle sorte que, lorsque la pression de fonctionnement (P_{work}) est supérieure au seuil de pression prédéterminé (p_{c}), la cylindrée basée sur la pression (Vₚ) est définie comme étant égale à une seconde cylindrée basée sur la pression prédéterminée (Vₘₐₓₚ), la première cylindrée basée sur la pression prédéterminée (Vₘᵢₙₚ) étant inférieure à la seconde cylindrée basée sur la pression prédéterminée (Vₘₐₓₚ).

4. Transmission hydrostatique selon la Revendication 3, dans laquelle l'unité de commande électronique (ECU) est configurée de telle sorte que, lorsque la pression de fonctionnement (P_{work}) est égale au seuil de pression prédéterminé (p_{c}) :
i) si la pression de fonctionnement (P_{work}) tend à augmenter et la cylindrée du
moteur hydraulique (32) est inférieure à la seconde cylindrée basée sur la pression prédéterminée (Vₘₐₓₚ), la cylindrée basée sur la pression (Vₚ) augmente jusqu'à un maximum égal à la seconde cylindrée basée sur la pression prédéterminée (Vₘₐₓₚ) ;
ii) si la pression de fonctionnement (Pwₒᵣₖ) tend à diminuer et la cylindrée du moteur hydraulique (32) est supérieure à la première cylindrée basée sur la pression prédéterminée (Vₘᵢₙₚ), la cylindrée basée sur la pression (Vₚ) diminue jusqu'à un minimum égal à la première cylindrée basée sur la pression prédéterminée (Vₘᵢₙₚ)

5. Transmission hydrostatique selon la Revendication 4, dans laquelle l'unité de commande électronique (ECU) comprend en outre un régulateur PID, et dans laquelle, lorsque la pression de fonctionnement (P_{work}) est égale ou supérieure au seuil de pression prédéterminé (p_{c}), la cylindrée basée sur la pression (Vₚ) est commandée au moyen dudit régulateur PID.

6. Transmission hydrostatique selon l'une quelconque des revendications précédentes, dans laquelle l'unité de commande électronique (ECU) est en outre configurée pour contrôler le fonctionnement de la transmission hydrostatique (100) en fonction de la position d'un commutateur marche avant/point mort/marche arrière (AVNAR) du véhicule de travail (10).

7. Transmission hydrostatique selon l'une quelconque des revendications précédentes, comprenant en outre un dispositif de réglage de cylindrée d'un moteur (42) associé au moteur hydraulique (32) pour régler la cylindrée de celui-ci, et une électrovanne de moteur (40) agencée pour recevoir un courant d'attaque (im), généré par l'unité de commande électronique (ECU) et représentatif de la cylindrée commandée (V_{cmd}), et pour générer, en fonction dudit courant d'attaque (im), une pression pilote (pₘ) pour commander la cylindrée du dispositif de réglage de cylindrée du moteur (42).

8. Transmission hydrostatique selon l'une quelconque des revendications précédentes, dans laquelle la pompe hydraulique (30) est une pompe hydraulique à cylindrée variable (30) à commande électronique.

9. Transmission hydrostatique selon la Revendication 8 comprenant en outre un dispositif de réglage de cylindrée d'une pompe associé à la pompe hydraulique (30) pour régler la cylindrée de celle-ci, et une électrovanne de pompe agencée pour recevoir un courant d'attaque de pompe, généré par l'unité de commande électronique (ECU) et représentatif de la cylindrée commandée (V_{cmd}) de la pompe, et pour générer, en fonction dudit courant d'attaque de pompe, une pression pilote de pompe pour commander la cylindrée du dispositif de réglage de cylindrée de la pompe.

10. Transmission hydrostatique selon la Revendication 8 ou la Revendication 9, dans laquelle l'unité de commande électronique (ECU) est configurée pour commander la cylindrée de la pompe hydraulique (30) de manière à ce qu'elle augmente à mesure que le nombre de tours (tr/min) du moteur à combustion interne (28) augmente.

11. Véhicule de travail (10), notamment chargeuse sur pneus compacte, comprenant des roues motrices (16), une transmission hydrostatique (100) selon l'une quelconque des revendications précédentes, et un moteur à combustion interne (2 à 8) couplé mécaniquement à la pompe hydraulique (30) de ladite transmission hydrostatique (100), dans lequel lesdites roues motrices (16) sont couplées mécaniquement au moteur hydraulique (32) de la transmission hydrostatique (100).

12. Procédé de commande d'une transmission hydrostatique (100) selon l'une quelconque des revendications 1 à 10, comprenant les étapes consistant à :
a) si le véhicule de travail (10) avance, régler la pression (p_{f}) sur la conduite avant (101) de la transmission hydrostatique (100) comme la pression de fonctionnement (P_{work}) ; si le véhicule de travail (10) recule, régler la pression (pt) sur la conduite arrière (102) de la transmission hydrostatique (100) comme la pression de fonctionnement (P_{work}) ;
b) déterminer la cylindrée basée sur la pression (Vₚ) du moteur hydraulique (32) en fonction de la pression de fonctionnement (P_{work}) ;
c) déterminer la cylindrée basée sur la vitesse (Vᵥ) du moteur hydraulique (32) en fonction de la vitesse de déplacement (uᵥ) du véhicule de travail (10) ;
d) contrôler le réglage de la cylindrée du moteur hydraulique (32) en réglant une cylindrée commandée (V_{cmd}) du moteur hydraulique (32) égale à la cylindrée basée sur la pression (Vₚ) la plus élevée et la cylindrée basée sur la vitesse (Vᵥ) ainsi déterminée ;

13. Procédé selon la Revendication 12, dans lequel l'étape b) comprend les sous-étapes suivantes :
bI) comparer la pression de fonctionnement (P_{work}) à un seuil de pression prédéterminé (p_{c}) ; et
b2) régler la cylindrée basée sur la pression (Vp) comme étant égale à une première cylindrée basée sur la pression prédéterminée (Vₘᵢₙₚ), si la pression de fonctionnement (P_{work}) est inférieure au seuil de pression prédéterminé (p_{c}) ;
b2') régler la cylindrée basée sur la pression (Vₚ) comme étant égale à une seconde cylindrée basée sur la pression prédéterminée (Vmaxp), si la pression de fonctionnement (P_{work}) est supérieure au seuil de pression prédéterminé (p_{c}), dans laquelle la seconde cylindrée basée sur la pression prédéterminée (Vₘₐₓₚ) est supérieure à la première cylindrée basée sur la pression prédéterminée (Vₘᵢₙₚ) ; et
b2") si la pression de fonctionnement (P_{work}) est égale au seuil de pression prédéterminé (pc)
i) si la pression de fonctionnement (P_{work}) tend à augmenter et la cylindrée du moteur hydraulique (32) est inférieure à la seconde cylindrée basée sur la pression prédéterminée (Vₘₐₓₚ), augmenter la cylindrée basée sur la pression (Vₚ) jusqu'à un maximum égal à la seconde cylindrée basée sur la pression prédéterminée (Vₘₐₓₚ) ;
ii) si la pression de fonctionnement (P_{work}) tend à diminuer et la cylindrée du moteur hydraulique (32) est supérieure à la première cylindrée basée sur la pression prédéterminée (Vₘᵢₙₚ), diminuer la cylindrée basée sur la pression (Vₚ) jusqu'à un minimum égal à la première cylindrée basée sur la pression prédéterminée (Vₘᵢₙₚ)

14. Procédé selon la Revendication 12 ou la Revendication 13, dans lequel l'étape c) comprend les sous-étapes suivantes :
cI) comparer la vitesse de déplacement (uᵥ) du véhicule de travail (10) à un premier seuil de vitesse prédéterminé (v_{c1}) et à un second seuil de vitesse prédéterminé (v_{c2}) ; le premier seuil de vitesse (v_{c1}) étant inférieur au second seuil de vitesse (v_{c2}) ;
c2) déterminer une cylindrée basée sur la vitesse (Vᵥ) comme suit :
- une première cylindrée basée sur la vitesse prédéterminée (Vₘₐₓᵥ), si la vitesse de déplacement (uᵥ) du véhicule de travail (10) est inférieure au premier seuil de vitesse prédéterminé (v_{c1}) ;
- une seconde cylindrée basée sur la vitesse prédéterminée (Vₘᵢₙᵥ), si la vitesse de déplacement (uᵥ) du véhicule de travail (10) est supérieure au second seuil de vitesse prédéterminé (V_{c2}) ; la seconde cylindrée basée sur la vitesse prédéterminée (Vₘᵢₙᵥ) étant inférieure à la première cylindrée basée sur la vitesse prédéterminée (Vₘₐₓᵥ) ; ou
- une valeur de cylindrée comprise entre la première cylindrée basée sur la vitesse prédéterminée (Vₘₐₓᵥ) et la seconde
cylindrée basée sur la vitesse prédéterminée (Vₘᵢₙᵥ), si la vitesse de déplacement (uᵥ) du véhicule de travail (10) est comprise entre le premier seuil de vitesse (v_{c1}) et le second seuil de vitesse (V_{c2})

15. Procédé selon la Revendication 14, dans lequel la détermination de la cylindrée basée sur la vitesse (Vᵥ) dans ladite sous-étape c2) est effectuée de telle sorte que, lorsque la vitesse de déplacement (uᵥ) du véhicule de travail (10) est comprise entre le premier seuil de vitesse (v_{c1}) et le second seuil de vitesse (vc2), la cylindrée basée sur la vitesse (Vᵥ) diminue à mesure que la vitesse de déplacement (uᵥ) du véhicule de travail (10) augmente.
